# EUROPEAN PATENT APPLICATION

(11) **EP 4 442 751 A1**
(43) Date of publication of application: **09.10.2024**
(21) Application number: 22900882.6
(22) Date of filing: 16.09.2022
(51) Int. Cl.: C08L 7/00, B60C 1/00, C08K 3/04, C08K 3/36, C08K 5/548, C08L 9/06

(54) **RUBBER COMPOSITION FOR TIRES, TREAD RUBBER, AND TIRE**

(30) Priority: 30.11.2021 JP 2021194969
(71) Applicant: BRIDGESTONE CORPORATION, Chuo-ku Tokyo 104-8340 (JP)
(72) Inventor: YANAGISAWA Yasuto, Tokyo 104-8340 (JP)
(74) Representative: Marks & Clerk LLP
(86) International application number: PCT/JP2022/034842
(87) International publication number: WO 2023/100447

(57) **Abstract**

Provided is a rubber composition for tire that can prevent discoloration of tire appearance while improving the wet grip performance and reducing the rolling resistance of a tire. The rubber composition for tire contains a rubber component, a filler, a silane coupling agent, and a fatty acid metal salt, where the rubber component contains isoprene skeleton rubber and styrene-butadiene rubber, the filler contains at least silica, the silane coupling agent has a thiol group, the content of the silane coupling agent is 1 part by mass or more and 10.5 parts by mass or less with respect to 100 parts by mass of the silica, and the content of the fatty acid metal salt is 0.1 parts by mass or more and 3.5 parts by mass or less with respect to 100 parts by mass of the rubber component.

## Description

### TECHNICAL FIELD

The present disclosure relates to a rubber composition for tire, a tread rubber, and a tire.

### BACKGROUND

Various studies have been made to improve braking performance on a wet road surface (hereinafter, abbreviated as "wet grip performance") from the viewpoint of improving vehicle safety.

On the other hand, in response to global moves to regulate carbon dioxide emissions with increased interest in environmental problems in recent years, demand to improve the fuel efficiency of automobiles is growing. To meet such demand, improvement in fuel efficiency (reduction in rolling resistance) is also required in tire performance.

Various technical studies have been conducted to achieve both good wet grip performance and low rolling resistance in tires. For example, WO 2017/188139 A1 (PTL 1) describes a rubber composition containing emulsion-polymerized styrene-butadiene rubber (E-SBR), solution-polymerized styrene-butadiene rubber (S-SBR), and polymer (P) having a lower glass-transition temperature (Tg) than that of the E-SBR and S-SBR, where a ratio of their contents satisfies a specific relationship. It is described that the rubber composition can reduce the rolling resistance of a tire while improving the wet grip performance of a tire.

### CITATION LIST

### Patent Literature

PTL 1: WO 2017/188139 A1

### SUMMARY

### (Technical Problem)

However, conventional rubber compositions, such as the one described in PTL 1, have limitations in achieving both good wet grip performance and low rolling resistance in tires, and there is still room for improvement.

On the other hand, we found that by using a rubber composition containing a silane coupling agent having a thiol group in a tire, it is possible to further improve the wet grip performance and reduce the rolling resistance of the tire. However, as a result of further study, we found that when a tire that uses a rubber composition containing a silane coupling agent having a thiol group ages, by-products derived from the silane coupling agent migrate to the tire surface, causing discoloration of tire appearance.

It could thus be helpful to provide a rubber composition for tire that can prevent discoloration of tire appearance while improving the wet grip performance and reducing the rolling resistance of a tire, and a tread rubber made of the rubber composition.

Further, it could be helpful to provide a tire that has excellent wet grip performance and low rolling resistance and hardly discolors in appearance.

### (Solution to Problem)

Primary features of the rubber composition for tire, tread rubber, and tire of the present disclosure are as follows.
[1] A rubber composition for tire, comprising a rubber component, a filler, a silane coupling agent, and a fatty acid metal salt, wherein
   the rubber component comprises isoprene skeleton rubber and styrene-butadiene rubber,
   the filler comprises at least silica,
   the silane coupling agent has a thiol group,
   a content of the silane coupling agent is 1 part by mass or more and 10.5 parts by mass or less with respect to 100 parts by mass of the silica, and
   a content of the fatty acid metal salt is 0.1 parts by mass or more and 3.5 parts by mass or less with respect to 100 parts by mass of the rubber component.
[2] The rubber composition for tire according to aspect [1], wherein the filler further comprises carbon black, and a proportion of the silica in a total amount of the silica and the carbon black is 80% by mass or more and less than 100% by mass.
[3] The rubber composition for tire according to aspect [1] or [2], wherein a content of the silica is 20 parts by mass or more and less than 120 parts by mass with respect to 100 parts by mass of the rubber component.
[4] The rubber composition for tire according to any one of aspects [1] to [3], wherein the silane coupling agent has 20 or more and 75 or less carbon atoms.
[5] The rubber composition for tire according to any one of aspects [1] to [4], wherein a content of the styrene-butadiene rubber is 10 parts by mass to 90 parts by mass in 100 parts by mass of the rubber component.
[6] The rubber composition for tire according to any one of aspects [1] to [5], wherein the styrene-butadiene rubber comprises at least styrene-butadiene rubber having a bound styrene content of 35% by mass or more.
[7] The rubber composition for tire according to any one of aspects [1] to [6], wherein the styrene-butadiene rubber is modified styrene-butadiene rubber.
[8] A tread rubber, comprising the rubber composition for tire according to any one of aspects [1] to [7].
[9] A tire, comprising the tread rubber according to aspect [8].

### (Advantageous Effect)

According to the present disclosure, it is possible to provide a rubber composition for tire that can prevent discoloration of tire appearance while improving the wet grip performance and reducing the rolling resistance of a tire, and a tread rubber made of the rubber composition.

Further, according to the present disclosure, it is possible to provide a tire that has excellent wet grip performance and low rolling resistance and hardly discolors in appearance.

### DETAILED DESCRIPTION

The following describes the rubber composition for tire, tread rubber, and tire of the present disclosure in detail based on their embodiments.

### <Rubber composition for tire>

The rubber composition for tire of the present disclosure contains a rubber component, a filler, a silane coupling agent, and a fatty acid metal salt. In the rubber composition for tire of the present disclosure, the rubber component contains isoprene skeleton rubber and styrene-butadiene rubber, the filler contains at least silica, the silane coupling agent has a thiol group, the content of the silane coupling agent is 1 part by mass or more and 10.5 parts by mass or less with respect to 100 parts by mass of the silica, and the content of the fatty acid metal salt is 0.1 parts by mass or more and 3.5 parts by mass or less with respect to 100 parts by mass of the rubber component.

In the rubber composition for tire of the present disclosure, isoprene skeleton rubber and styrene-butadiene rubber as the rubber component contribute to improving the wet grip performance and reducing the rolling resistance of a tire using the rubber composition. In the rubber composition for tire of the present disclosure, silica as a filler also contributes to improving the wet grip performance and reducing the rolling resistance of a tire using the rubber composition. In the rubber composition for tire of the present disclosure, the fatty acid metal salt acts as a processing aid. When the fatty acid metal salt is blended in an amount of 0.1 parts by mass or more with respect to 100 parts by mass of the rubber component, the adhesiveness of the rubber composition is suppressed, the rubber composition hardly adheres to manufacturing equipment, and the productivity of the rubber composition improves.

Further, in the rubber composition for tire containing the rubber component, filler and fatty acid metal salt, when the silane coupling agent having a thiol group is blended in an amount of 1 part by mass or more with respect to 100 parts by mass of the silica, it is possible to further improve the wet grip performance and reduce the rolling resistance of a tire using the rubber composition.

However, as described above, we found that when a tire that uses a rubber composition containing a silane coupling agent having a thiol group ages, by-products derived from the silane coupling agent migrate to the tire surface, causing discoloration of tire appearance. Here, it is considered that the by-products derived from the silane coupling agent are formed due to heat or the like during vulcanization in rubber composition production processes. On the other hand, in the rubber composition for tire of the present disclosure, the content of the silane coupling agent having a thiol group is 10.5 parts by mass or less with respect to 100 parts by mass of the silica, and the content of the fatty acid metal salt is 3.5 parts by mass or less with respect to 100 parts by mass of the rubber component. This can delay or stop the migration of the reaction by-products to the surface of a tire using the rubber composition and to prevent discoloration of tire appearance.

Therefore, when a tire uses the rubber composition for tire of the present disclosure, it is possible to prevent discoloration of tire appearance while improving the wet grip performance and reducing the rolling resistance of the tire.

### (Rubber component)

The rubber composition for tire of the present disclosure contains a rubber component. The rubber component contains isoprene skeleton rubber and styrene-butadiene rubber, and may further contain other rubber components.

### -Isoprene skeleton rubber-

The isoprene skeleton rubber is a rubber having isoprene units as the main skeleton, and specifically examples thereof include natural rubber (NR), and synthesis isoprene rubber (IR).

When the rubber component contains the isoprene skeleton rubber, the fracture strength of the rubber composition can be increased. As a result, it is possible to reduce the rolling resistance of a tire using the rubber composition, improve the fuel efficiency, and improve the wet grip performance of the tire.

The content of the isoprene skeleton rubber is preferably 10 parts by mass to 90 parts by mass and more preferably 20 parts by mass to 80 parts by mass in 100 parts by mass of the rubber component. When the content of the isoprene skeleton rubber is 10 parts by mass to 90 parts by mass in 100 parts by mass of the rubber component, it is possible to further improve the wet grip performance and reduce the rolling resistance of a tire using rubber composition.

### -Styrene-butadiene rubber-

Any styrene-butadiene rubber may be used as the styrene-butadiene rubber (SBR). It may be obtained by solution polymerization, emulsion polymerization, or other polymerization method.

The content of the styrene-butadiene rubber is preferably 10 parts by mass to 90 parts by mass and more preferably 20 parts by mass to 80 parts by mass in 100 parts by mass of the rubber component. When the content of the styrene-butadiene rubber is 10 parts by mass or more in 100 parts by mass of the rubber component, the wet grip performance of a tire using the rubber composition is further improved, and when the content is 90 parts by mass or less in 100 parts by mass of the rubber component, the rolling resistance of a tire using the rubber composition is further reduced.

The styrene-butadiene rubber contains a styrene unit and a butadiene unit as monomer units, and the content of the styrene unit, that is, the bound styrene content is not particularly limited. From the viewpoint of further improving the wet grip performance of a tire using the rubber composition, the styrene-butadiene rubber preferably contains at least styrene-butadiene rubber having a bound styrene content of 35% by mass or more. Here, the proportion of the styrene-butadiene rubber having a bound styrene content of 35% by mass or more in the total amount of the styrene-butadiene rubber is preferably 10% by mass or more, more preferably 20% by mass or more, and may be 100% by mass.

The bound styrene content in the styrene-butadiene rubber can be controlled by adjusting the amount of monomer used for polymerizing the styrene-butadiene rubber, the degree of polymerization, and the like. The bound styrene content can be measured by ultraviolet absorption of phenyl group.

The styrene-butadiene rubber may be modified or unmodified, but it is preferably modified, that is, modified styrene-butadiene rubber is preferred. When modified styrene-butadiene rubber is used, it is possible to further improve the wet grip performance and reduce the rolling resistance of a tire using rubber composition.

When the styrene-butadiene rubber is modified, the styrene-butadiene rubber is preferably modified with an aminoalkoxysilane compound. From the viewpoint of having high affinity for filler, it is more preferable that the styrene-butadiene rubber has its terminal modified with an aminoalkoxysilane compound. When the terminal of the styrene-butadiene rubber is modified with an aminoalkoxysilane compound, interactions between the modified styrene-butadiene rubber and the filler (especially silica) increase significantly.

The aminoalkoxysilane compound is not particularly limited, but it is preferably an aminoalkoxysilane compound represented by the following general formula

R¹¹ₐ-Si-(OR¹²)₄₋ₐ ··· (i)

In the general formula (i), R¹¹ and R¹² each independently represent a monovalent aliphatic hydrocarbon group having 1 to 20 carbon atoms or a monovalent aromatic hydrocarbon group having 6 to 18 carbon atoms; at least one of R¹¹ and R¹² is substituted with an amino group; "a" represents an integer of 0 to 2; when there are multiple OR¹²s, OR¹²s may be the same as or different from each other; and the molecule contains no active proton therein.

The aminoalkoxysilane compound is also preferably an aminoalkoxysilane compound represented by the following general formula (ii).

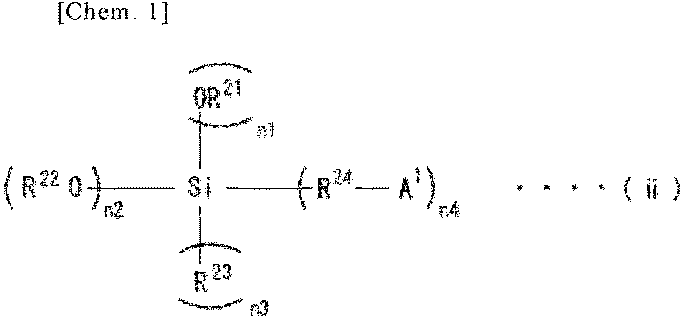

In the general formula (ii), n1+n2+n3+n4=4 (where n2 is an integer of 1 to 4, and n1, n3 and n4 are integers of 0 to 3).

A¹ is at least one functional group selected from the group consisting of a saturated cyclic tertiary amine compound residue, an unsaturated cyclic tertiary amine compound residue, a ketimine residue, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, A¹s may be the same as or different from each other, and A¹ may be a divalent group that combines with Si to form a cyclic structure.

R²¹ is a monovalent aliphatic or alicyclic hydrocarbon group having 1 to 20 carbon atoms or a monovalent aromatic hydrocarbon group having 6 to 18 carbon atoms. When n1 is 2 or more, R²¹ₛ may be the same as or different from each other.

R²² is a monovalent aliphatic or alicyclic hydrocarbon group having 1 to 20 carbon atoms or a monovalent aromatic hydrocarbon group having 6 to 18 carbon atoms, and any of them may contain a nitrogen atom and/or a silicon atom. When n2 is 2 or more, R²²s may be the same as or different from each other or may be taken together to form a ring.

R²³ is a monovalent aliphatic or alicyclic hydrocarbon group having 1 to 20 carbon atoms, a monovalent aromatic hydrocarbon group having 6 to 18 carbon atoms, or a halogen atom. When n3 is 2 or more, R²³s may be the same as or different from each other.

R²⁴ is a divalent aliphatic or alicyclic hydrocarbon group having 1 to 20 carbon atoms or a divalent aromatic hydrocarbon group having 6 to 18 carbon atoms. When n4 is 2 or more, R²⁴s may be the same as or different from each other.

The hydrolyzable group in the primary or secondary amino group having a hydrolyzable group is preferably a trimethylsilyl group or a tert-butyldimethylsilyl group, and it is particularly preferably a trimethylsilyl group.

The aminoalkoxysilane compound represented by the general formula (ii) is preferably an aminoalkoxysilane compound represented by the following general formula (iii).

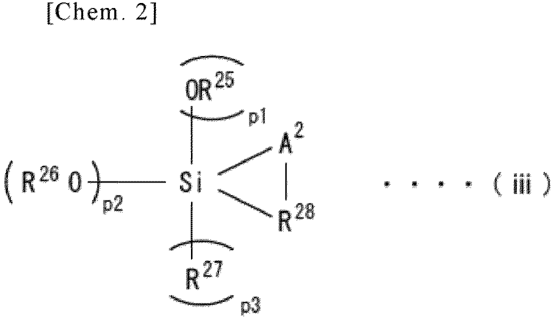

In the general formula (iii), p1+p2+p3=2 (where p2 is an integer of 1 to 2, and p1 and p3 are integers of 0 to 1).

A² is NRa (Ra is a monovalent hydrocarbon group, a hydrolyzable group, or a nitrogen-containing organic group).

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, and any of them may contain a nitrogen atom and/or a silicon atom. When p2 is 2, R²⁶s may be the same as or different from each other or may be taken together to form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

The hydrolyzable group is preferably a trimethylsilyl group or a tert-butyldimethylsilyl group, and it is particularly preferably a trimethylsilyl group.

The aminoalkoxysilane compound represented by the general formula (ii) is also preferably an aminoalkoxysilane compound represented by the following general formula (iv) or the following general formula (v).

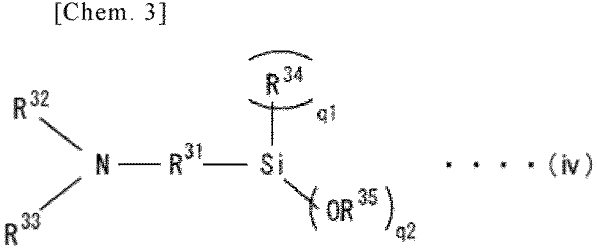

In the general formula (iv), q1+q2=3 (where q1 is an integer of 0 to 2, and q2 is an integer of 1 to 3).

R³¹ is a divalent aliphatic or alicyclic hydrocarbon group having 1 to 20 carbon atoms or a divalent aromatic hydrocarbon group having 6 to 18 carbon atoms.

R¹² and R³³ are each independently a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms, or a monovalent aromatic hydrocarbon group having 6 to 18 carbon atoms. When q1 is 2, R³⁴s may be the same as or different from each other.

R³⁵ is a monovalent aliphatic or alicyclic hydrocarbon group having 1 to 20 carbon atoms, or a monovalent aromatic hydrocarbon group having 6 to 18 carbon atoms. When q2 is 2 or more, R³⁵s may be the same as or different from each other.

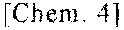

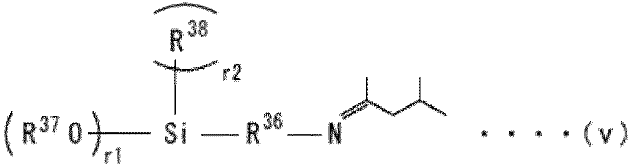

In the general formula (v), r1+r2=3 (where r1 is an integer of 1 to 3, and r2 is an integer of 0 to 2).

R³⁶ is a divalent aliphatic or alicyclic hydrocarbon group having 1 to 20 carbon atoms, or a divalent aromatic hydrocarbon group having 6 to 18 carbon atoms.

R³⁷ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms. When r1 is 2 or more, R³⁷s may be the same as or different from each other.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms. When r2 is 2, R³⁸s may be the same as or different from each other.

Specific examples of the aminoalkoxysilane compound represented by the general formula (v) include N-(1,3-dimethylbutylidene)-3-triethoxysilyl-1-propanamine.

The aminoalkoxysilane compound represented by the general formula (ii) is also preferably an aminoalkoxysilane compound represented by the following general formula (vi) or the following general formula (vii).

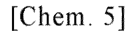

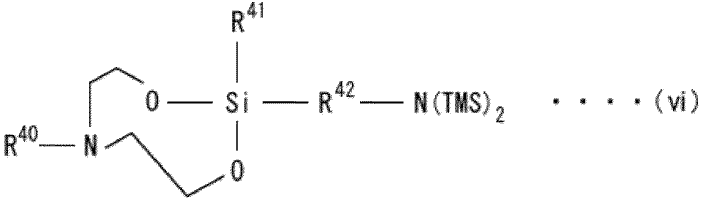

In the general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴² is a divalent aliphatic or alicyclic hydrocarbon group having 1 to 20 carbon atoms or a divalent aromatic hydrocarbon group having 6 to 18 carbon atoms.

As used herein, TMS represents a trimethylsilyl group (the same applies hereinafter).

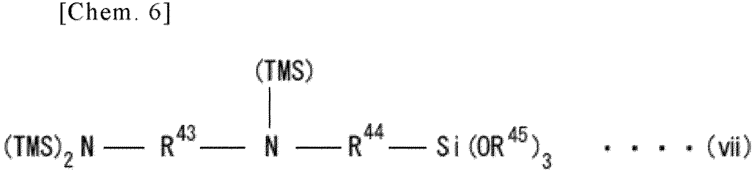

In the general formula (vii), R⁴³ and R⁴⁴ are each independently a divalent aliphatic or alicyclic hydrocarbon group having 1 to 20 carbon atoms, or a divalent aromatic hydrocarbon group having 6 to 18 carbon atoms.

R⁴⁵ is a monovalent aliphatic or alicyclic hydrocarbon group having 1 to 20 carbon atoms, or a monovalent aromatic hydrocarbon group having 6 to 18 carbon atoms, and R⁴⁵s may be the same as or different from each other.

The aminoalkoxysilane compound represented by the general formula (ii) is also preferably an aminoalkoxysilane compound represented by the following general formula (viii) or the following general formula (ix).

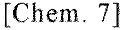

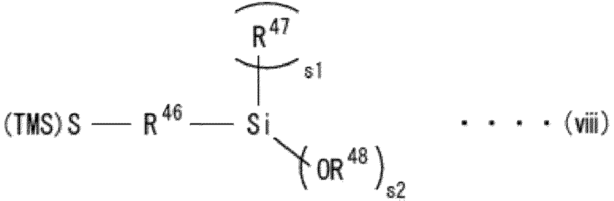

In the general formula (viii), s1+s2 is 3 (where s1 is an integer of 0 to 2, and s2 is an integer of 1 to 3).

R⁴⁶ is a divalent aliphatic or alicyclic hydrocarbon group having 1 to 20 carbon atoms, or a divalent aromatic hydrocarbon group having 6 to 18 carbon atoms.

R⁴⁷ and R⁴⁸ are each independently a monovalent aliphatic or alicyclic hydrocarbon group having 1 to 20 carbon atoms, or a monovalent aromatic hydrocarbon group having 6 to 18 carbon atoms. R⁴⁷s or R⁴⁸s may be the same as or different from each other.

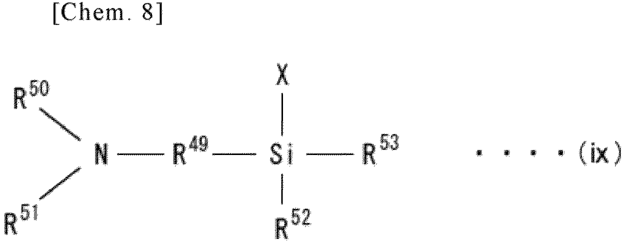

In the general formula (ix), X is a halogen atom.

R⁴⁹ is a divalent aliphatic or alicyclic hydrocarbon group having 1 to 20 carbon atoms, or a divalent aromatic hydrocarbon group having 6 to 18 carbon atoms.

R⁵⁰ and R⁵¹ are each independently a hydrolyzable group, a monovalent aliphatic or alicyclic hydrocarbon group having 1 to 20 carbon atoms, or a monovalent aromatic hydrocarbon group having 6 to 18 carbon atoms; alternatively, R⁵⁰ and R⁵¹ are combined to form a divalent organic group.

R⁵² and R⁵³ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

R⁵⁰ and R⁵¹ are preferably a hydrolyzable group, and the hydrolyzable group is preferably a trimethylsilyl group or a tert-butyldimethylsilyl group and is particularly preferably a trimethylsilyl group.

The aminoalkoxysilane compound represented by the general formula (ii) is also preferably an aminoalkoxysilane compound represented by the following general formula (x), the following general formula (xi), the following general formula (xii), or the following general formula (xiii).

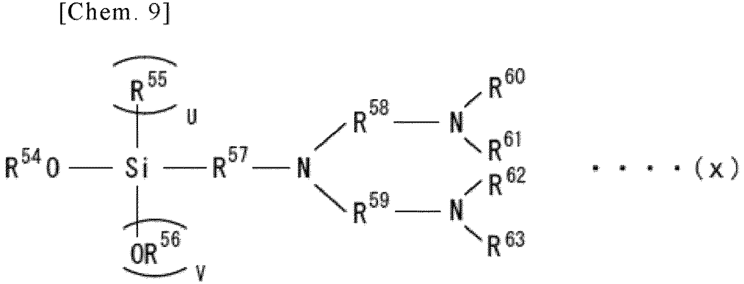

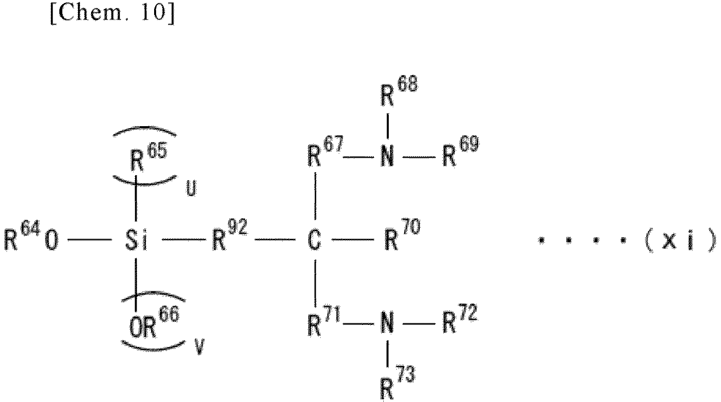

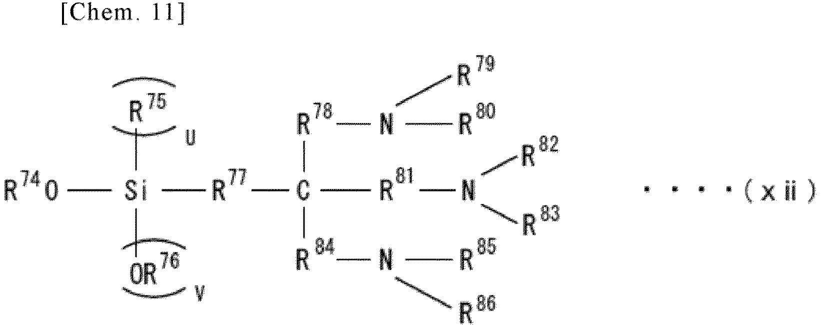

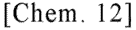

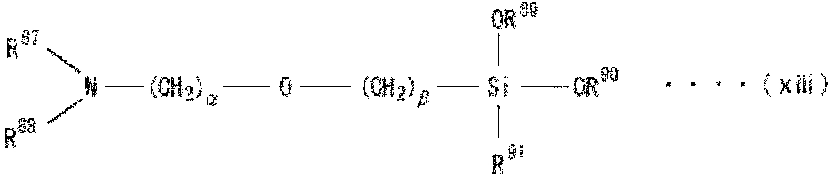

In the general formulas (x) to (xiii), symbols U and V are each an integer satisfying 0 to 2 and U+V=2.

R⁵⁴ to R⁹² in the general formulas (x) to (xiii) may be the same as or different from each other, which may be a monovalent or divalent aliphatic or alicyclic hydrocarbon group having 1 to 20 carbon atoms, or a monovalent or divalent aromatic hydrocarbon group having 6 to 18 carbon atoms.

In the general formula (xiii), α and β are integers of 0 to 5.

Among the compounds satisfying the general formula (x), general formula (xi) and general formula (xii), N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, 4-(3-(dimethylamino)propyl)-N1,N1,N7,N7-tetramethyl-4-((trimethoxysilyl)methyl)heptane-1,7-diamine are particularly preferred.

Among the compounds satisfying the general formula (xiii), N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, N,N-dimethyl-3-(3-(trimethoxysilyl)propoxy)propane-1-amine are particularly preferred.

When the styrene-butadiene rubber is modified, it is also preferable that the styrene-butadiene rubber is modified with a coupling agent represented by the following general formula (I). In this case, it is possible to further reduce the rolling resistance of a tire using the rubber composition.

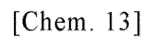

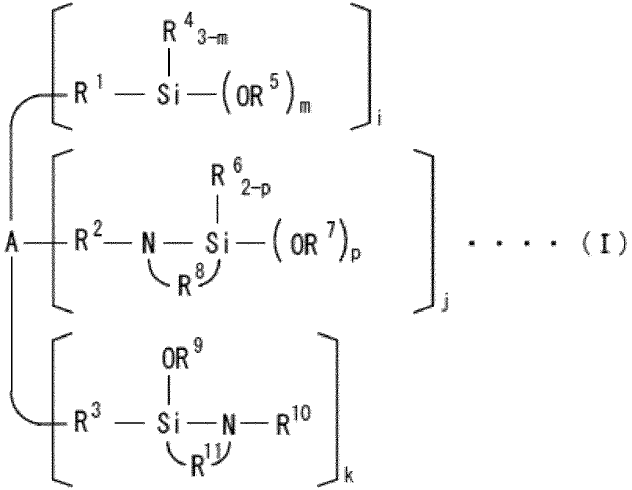

In the general formula (I), R¹, R² and R³ each independently represent a single bond or an alkylene group having 1 to 20 carbon atoms.

R⁴, R⁵, R⁶, R⁷ and R⁹ each independently represent an alkyl group having 1 to 20 carbon atoms.

R⁸ and R¹¹ each independently represent an alkylene group having 1 to 20 carbon atoms.

R¹⁰ represents an alkyl group or trialkylsilyl group having 1 to 20 carbon atoms.

In the general formula (I), "m" represents an integer of 1 to 3, and "p" represents 1 or 2.

When there are multiple R¹s to R¹¹s, "m"s, and "p"s, they are each independent.

In the general formula (I), "i", "j" and "k" each independently represent an integer of 0 to 6, where (i+j+k) is an integer of 3 to 10.

In the general formula (I), A represents a hydrocarbon group having 1 to 20 carbon atoms, or an organic group having 1 to 20 carbon atoms, having at least one type of atom selected from the group consisting of an oxygen atom, a nitrogen atom, a silicon atom, a sulfur atom and a phosphorus atom, and having no active hydrogen.

In the general formula (I), the hydrocarbon group represented by A includes saturated, unsaturated, aliphatic, and aromatic hydrocarbon groups. Examples of the organic group having no active hydrogen include an organic group not containing a functional group having active hydrogen such as hydroxyl group (-OH), secondary amino group (>NH), primary amino group (-NH₂), and sulfhydryl group (-SH).

In the general formula (I), A is preferably represented by any one of the following general formulas (II) to (V). When A is represented by any one of the general formulas (II) to (V), modified styrene-butadiene rubber with better performance can be obtained.

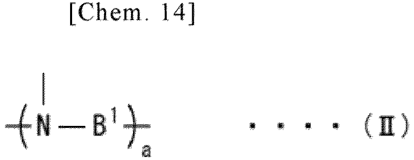

In the general formula (II), B¹ represents a single bond or a hydrocarbon group having 1 to 20 carbon atoms, and "a" represents an integer of 1 to 10. When there are multiple B¹s, each B¹ is independent.

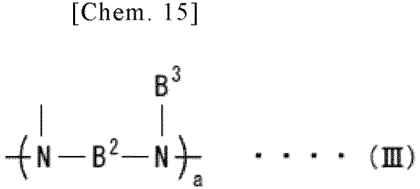

In the general formula (III), B² represents a single bond or a hydrocarbon group having 1 to 20 carbon atoms, B³ represents an alkyl group having 1 to 20 carbon atoms, and "a" represents an integer of 1 to 10. When there are multiple B²s and B³s, each B² and B³ is independent.

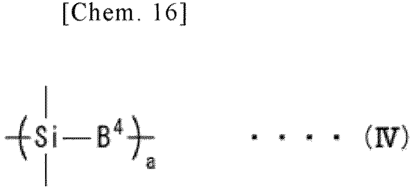

In the general formula (IV), B⁴ represents a single bond or a hydrocarbon group having 1 to 20 carbon atoms, and "a" represents an integer of 1 to 10. When there are multiple B⁴s, each B⁴ is independent. 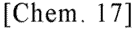 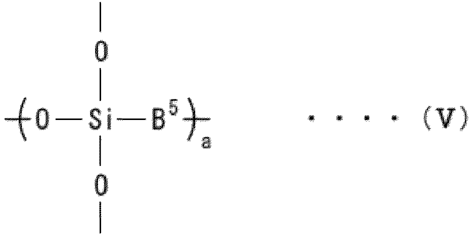 In the general formula (V), B⁵ represents a single bond or a hydrocarbon group having 1 to 20 carbon atoms, and "a" represents an integer of 1 to 10. When there are multiple B⁵s, each B⁵ is independent.

Regarding B¹, B², B⁴ and B⁵ in the general formulas (II) to (V), examples of the hydrocarbon group having 1 to 20 carbon atoms include an alkylene group having 1 to 20 carbon atoms.

Preferably, in the general formula (I), A is represented by the general formula (II) or (III), and "k" represents 0.

More preferably, in the general formula (I), A is represented by the general formula (II) or (III) and "k" represents 0, and, in the general formula (II) or (III), "a" represents an integer of 2 to 10.

Still more preferably, in the general formula (I), A is represented by the general formula (II) and "k" represents 0, and, in the general formula (II), "a" represents an integer of 2 to 10.

Examples of the coupling agent represented by the general formula (I) include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine, among which tetrakis(3-trimethoxysilylpropyl)-1,3-propanediamine and tetrakis(3-trimethoxysilylpropyl)-1,3-bisaminomethylcyclohexane are particularly preferred.

### -Other rubber-

The rubber component may further contain another rubber, and the content of the other rubber is preferably 20 parts by mass or less and more preferably 10 parts by mass or less in 100 parts by mass of the rubber component. Examples of the other rubber include butadiene rubber (BR), chloroprene rubber (CR), butyl rubber (IIR), halogenated butyl rubber, ethylene-propylene rubber (EPR, EPDM), fluoro rubber, silicone rubber, and urethane rubber.

### (Filler)

The rubber composition for tire of the present disclosure contains a filler, and the filler contains at least silica. That is, it may contain only silica or may further contain another filler. By containing the filler, the reinforcing properties of the rubber composition are improved.

The content of the filler in the rubber composition is preferably 20 parts by mass or more and less than 120 parts by mass with respect to 100 parts by mass of the rubber component. When the content of the filler in the rubber composition is 20 parts by mass or more with respect to 100 parts by mass of the rubber component, a tire using the rubber composition is sufficiently reinforced, and when the content is less than 120 parts by mass, the rolling resistance of a tire using the rubber composition is reduced.

### -Silica -

Examples of the silica include wet silica (hydrous silicate), dry silica (anhydrous silicate), calcium silicate, and aluminum silicate, among which wet silica is preferred. These silicas may be used alone or in combination of two or more.

The content of the silica in the rubber composition is preferably 20 parts by mass or more and less than 120 parts by mass with respect to 100 parts by mass of the rubber component. When the content of the silica is 20 parts by mass or more with respect to 100 parts by mass of the rubber component, the wet grip performance of a tire using the rubber composition is further improved. When the content of the silica is less than 120 parts by mass with respect to 100 parts by mass of the rubber component, the rolling resistance of a tire using the rubber composition is further reduced, and the workability of the rubber composition is improved. From the viewpoint of further improving the wet grip performance of the tire, the content of the silica is more preferably 30 parts by mass or more, still more preferably 40 parts by mass or more, and particularly preferably 55 parts by mass or more with respect to 100 parts by mass of the rubber component. Further, from the viewpoint of further reducing the rolling resistance of the tire, the content of the silica is more preferably 110 parts by mass or less, still more preferably 100 parts by mass or less, and particularly preferably 90 parts by mass or less with respect to 100 parts by mass of the rubber component.

### -Carbon black-

The filler preferably further contains carbon black. The carbon black can reinforce the rubber composition to improve the wear resistance and other properties of the rubber composition.

The carbon black is not particularly limited, and examples thereof include GPF, FEF, HAF, ISAF, and SAF grade carbon black. These carbon black products may be used alone or in combination of two or more.

The content of the carbon black is preferably 1 part by mass or more and more preferably 3 parts by mass or more, and is preferably 20 parts by mass or less and more preferably 15 parts by mass or less, with respect to 100 parts by mass of the rubber component.

When the filler contains silica and carbon black, the proportion of the silica in the total amount of the silica and the carbon black is preferably 80% by mass or more and less than 100%, and more preferably 90% by mass or more and less than 100%. When the proportion of the silica is 80% by mass or more, the wet grip performance is further improved and the rolling resistance is further reduced in a tire using the rubber composition, and particularly, the wet grip performance is greatly improved.

### -Other filler-

In addition to silica and carbon black, the filler may contain an inorganic filler such as clay, talc, calcium carbonate, and aluminum hydroxide, for example.

The other filler described above is preferably contained in such a range that the proportion of the silica in the filler is 80% by mass or more.

### (Silane coupling agent)

The rubber composition for tire of the present disclosure contains a silane coupling agent having a thiol group, and it may further contain another silane coupling agent. By containing a silane coupling agent having a thiol group, it is possible to further improve the wet grip performance and reduce the rolling resistance of a tire using the rubber composition.

The content of the silane coupling agent having a thiol group is 1 part by mass or more and 10.5 parts by mass or less with respect to 100 parts by mass of the silica. When the content of the silane coupling agent is 1 part by mass or more with respect to 100 parts by mass of the silica, it is possible to further improve the wet grip performance and reduce the rolling resistance of a tire using the rubber composition. On the other hand, when the content of the silane coupling agent exceeds 10.5 parts by mass with respect to 100 parts by mass of the silica, the reaction by-products migrate to the surface of a tire using the rubber composition as the tire ages, resulting in discoloration of tire appearance. From the viewpoint of good wet grip performance and low rolling resistance of a tire, the content of the silane coupling agent is preferably 2 parts by mass or more and more preferably 3 parts by mass or more with respect to 100 parts by mass of the silica. From the viewpoint of preventing discoloration of tire appearance, the content of the silane coupling agent is preferably 10.3 parts by mass or less and more preferably 10.1 parts by mass or less with respect to 100 parts by mass of the silica.

The silane coupling agent preferably has 20 or more and 75 or less carbon atoms. When the number of carbon atoms of the silane coupling agent is 20 or more and 75 or less, it is possible to further improve the wet grip performance and reduce the rolling resistance of a tire using the rubber composition.

The silane coupling agent preferably contains an alkyl group, and here, the alkyl group having the largest number of carbon atoms preferably has 7 to 20 carbon atoms. In this case, it is possible to further improve the wet grip performance and reduce the rolling resistance of a tire using the rubber composition.

The silane coupling agent having a thiol group is preferably represented by the following general formula (1).

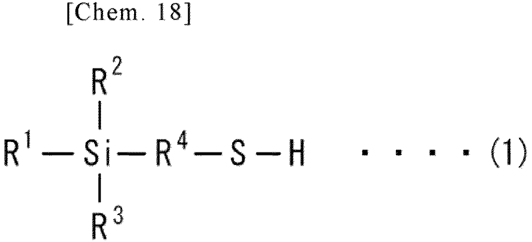

In the general formula (1), R¹, R² and R³ are each independently represented by -O-CⱼH₂ⱼ₊₁, -(O-CₖH₂ₖ-)ₐ-O-CₘH₂ₘ₊₁ or -CₙH₂ₙ₊₁, j is 0 to 12, k is 1 to 12, a is 1 to 12, m is 0 to 20 (preferably 7 to20), and n is 0 to 12.

In the general formula (1), R⁴ is a linear, branched, or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group or aralkylene group having 1 to 12 carbon atoms.

In the general formula (1), at least one of R¹, R² and R³ is preferably -O-CⱼH₂ⱼ₊₁, and at least one of R¹, R² and R³ is preferably -(O-CₖH₂ₖ-)ₐ-O-CₘH₂ₘ₊₁.

Examples of the silane coupling agent represented by the above general formula (1) include 3-(trimethoxysilyl)-1-propanethiol, 3-(triethoxysilyl)-1-propanethiol, 3-(methyldimethoxysilyl)-1-propanethiol, 2-(trimethoxysilyl)-1-ethanethiol, 2-(triethoxysilyl)-1-ethanethiol, 2-(methyldimethoxysilyl)-1-ethanethiol, (trimethoxysilyl)methanethiol, (triethoxysilyl)methanethiol, (methyldimethoxysilyl)methanethiol, and 3-[ethoxybis(3,6,9,12,15-pentaoxaoctacosan-1-yloxy)silyl]-1-propanethiol {product name "Si363" manufactured by Evonik Degussa, [C₁₃H₂₇O(CH₂CH₂O)₅]₂(CH₃CH₂O)Si(CH₂)₃SH}. These silane coupling agents may be used alone or in combination of two or more.

Among the above, from the viewpoint of further improving the wet grip performance and reducing the rolling resistance of a tire using the rubber composition, 3-[ethoxybis(3,6,9,12,15-pentaoxaoctacosan-1-yloxy)silyl]-1-propanethiol is particularly preferred.

### (Fatty acid metal salt)

The rubber composition for tire of the present disclosure contains a fatty acid metal salt. The fatty acid metal salt acts as a processing aid, suppresses the adhesiveness of the rubber composition, and suppresses adhesion of the rubber composition to manufacturing equipment, thereby contributing to improving the productivity of the rubber composition.

The content of the fatty acid metal salt is 0.1 parts by mass or more and 3.5 parts by mass or less with respect to 100 parts by mass of the rubber component. When the content of the fatty acid metal salt is 0.1 parts by mass or more with respect to 100 parts by mass of the rubber component, the adhesiveness of the rubber composition can be suppressed and adhesion of the rubber composition to manufacturing equipment can be suppressed to improve the productivity of the rubber composition. On the other hand, when the content of the fatty acid metal salt exceeds 3.5 parts by mass with respect to 100 parts by mass of the rubber component, the reaction by-products migrate to the surface of a tire using the rubber composition as the tire ages, resulting in discoloration of tire appearance. From the viewpoint of suppressing the adhesiveness of the rubber composition, the content of the fatty acid metal salt is preferably 0.2 parts by mass or more and more preferably 0.3 parts by mass or more with respect to 100 parts by mass of the rubber component. Further, from the viewpoint of preventing discoloration of tire appearance, the content of the fatty acid metal salt is preferably 3.4 parts by mass or less and more preferably 3.3 parts by mass or less with respect to 100 parts by mass of the rubber component.

Examples of metal used in the fatty acid metal salt include Zn, K, Ca, Na, Mg, Co, Ni, Ba, Fe, Al, Cu, and Mn, among which Zn and K are preferred.

Examples of the fatty acid used in the fatty acid metal salt include saturated or unsaturated fatty acids having 4 to 30 carbon atoms with a linear, branched, or cyclic structure, and mixtures thereof. Among the above, saturated or unsaturated linear fatty acids having 10 to 22 carbon atoms are preferred. Examples of the saturated linear fatty acid having 10 to 22 carbon atoms include capric acid, lauric acid, myristic acid, pentadecanoic acid, palmitic acid, margaric acid, stearic acid, and arachidic acid, and examples of the unsaturated linear fatty acid having 10 to 22 carbon atoms include undecylenic acid, oleic acid, elaidic acid, cetoleic acid, erucic acid, linoleic acid, linolenic acid, and arachidonic acid.

These fatty acid metal salts may be used alone or in combination of two or more.

### (Other components)

The rubber composition for tire of the present disclosure contains the above-described rubber component, filler, silane coupling agent and fatty acid metal salt, and if necessary, it may appropriately select and contain various components commonly used in the rubber industry within a range that does not impair the effects of the present disclosure, such as stearic acid, zinc oxide (zinc white), wax, an antioxidant, a resin, a softener, a vulcanization accelerator, and a vulcanizing agent. Commercial products may be suitably used as these compounding agents.

The content of the stearic acid is not particularly limited, and it is preferably in a range of 0.1 parts by mass to 5 parts by mass and more preferably 0.5 parts by mass to 4 parts by mass with respect to 100 parts by mass of the rubber component.

The content of the zinc oxide (zinc white) is not particularly limited, and it is preferably in a range of 0.1 parts by mass to 10 parts by mass and more preferably 1 part by mass to 8 parts by mass with respect to 100 parts by mass of the rubber component.

Examples of the wax include paraffin wax and microcrystalline wax. The content of the wax is not particularly limited, and it is preferably in a range of 0.1 parts by mass to 5 parts by mass and more preferably 1 part by mass to 4 parts by mass with respect to 100 parts by mass of the rubber component.

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidant is not particularly limited, and it is preferably in a range of 0.1 parts by mass to 5 parts by mass and more preferably 1 part by mass to 4 parts by mass with respect to 100 parts by mass of the rubber component.

Examples of the resin include C₅-based resin, C₉-based resin, C₅/C₉-based resin, dicyclopentadiene resin, rosin resin, alkylphenol resin, and terpene phenol resin. The content of the resin is not particularly limited, and it is preferably in a range of 1 part by mass to 40 parts by mass and more preferably 3 parts by mass to 20 parts by mass with respect to 100 parts by mass of the rubber component.

Examples of the vulcanization accelerator include a sulfenamide-based vulcanization accelerator, a guanidine-based vulcanization accelerator, a thiazole-based vulcanization accelerator, a thiuram-based vulcanization accelerator, and a dithiocarbamate-based vulcanization accelerator. Examples of the vulcanizing agent include sulfur. The total content of the vulcanization system including the vulcanization accelerator and the vulcanizing agent is not particularly limited, and it is preferably in a range of 1 part by mass to 10 parts by mass and more preferably in a range of 2 parts by mass to 8 parts by mass with respect to 100 parts by mass of the rubber component.

### (Method of producing rubber composition)

A method of producing the rubber composition is not particularly limited. The rubber composition can be produced, for example, by blending various components appropriately selected as necessary into the above-described rubber component, filler, silane coupling agent and fatty acid metal salt, and performing kneading, heating, extruding, and other processes. Further, vulcanized rubber can be obtained by vulcanizing the obtained rubber composition.

There is no particular limitation on the conditions of the kneading, and various conditions such as the charge volume of a kneading device, the rotation speed of a rotor, the ram pressure, the kneading temperature and the kneading time, and the type of kneading device can be appropriately selected depending on the purpose. Examples of the kneading device include a Banbury mixer, an intermix, a kneader, and a roll that are normally used for kneading a rubber composition.

There is no particular limitation on the conditions of the heating, and various conditions such as heating temperature, heating time, and heating device can be appropriately selected depending on the purpose. Examples of the heating device include a heating roll machine normally used for heating a rubber composition.

There is no particular limitation on the conditions of the extrusion, and various conditions such as extrusion time, extrusion speed, extrusion device, and extrusion temperature can be appropriately selected depending on the purpose. Examples of the extrusion device include an extruder normally used for extruding a rubber composition. The extrusion temperature can be appropriately determined.

The device, method, conditions, and the like for performing the vulcanization are not particularly limited and can be appropriately selected depending on the purpose. Examples of the device for performing the vulcanization include a molding vulcanizer using a mold that is normally used for vulcanizing a rubber composition. Regarding the vulcanization conditions, the temperature is, for example, about 100°C to 190°C.

### <Tread rubber>

The tread rubber of the present disclosure contains the rubber composition for tire described above. Because the tread rubber of the present disclosure contains the rubber composition for tire described above, it is possible to prevent discoloration of tire appearance while improving the wet grip performance and reducing the rolling resistance of a tire when the tread rubber is used in the tire.

The tread rubber of the present disclosure may be applied to a new tire or may be applied to a retreaded tire.

### <Tire>

The tire of the present disclosure includes the tread rubber described above. Because the tire of the present disclosure includes the tread rubber described above, it has excellent wet grip performance and low rolling resistance, and is resistant to discoloration in appearance.

In accordance with the type of tire intended for use, the tire of the present disclosure may be obtained by first forming a tire using an unvulcanized rubber composition and then vulcanizing the tire, or by first forming a tire using semi-vulcanized rubber obtained by a preliminary vulcanization process or the like and then fully vulcanizing the tire. The tire of the present disclosure is preferably a pneumatic tire. The pneumatic tire may be filled with ordinary air or air with an adjusted partial pressure of oxygen, or may be filled with an inert gas such as nitrogen, argon, or helium.

### EXAMPLES

The following describes the present disclosure in more detail based on examples. The present disclosure is not limited by any means to these examples.

### <Analysis method of SBR>

The bound styrene content in the styrene-butadiene rubber (SBR) was measured with the following method.

### (1) Bound styrene content

Synthesized styrene-butadiene rubber was used as a sample, and 100 mg of the sample was diluted to 100 mL with chloroform and dissolved to obtain a sample for measurement. The bound styrene content (% by mass) with respect to 100% by mass of the sample was measured based on the absorption amount of ultraviolet absorption wavelength (near 254 nm) by the phenyl group of styrene. A spectrophotometer "UV-2450" manufactured by SHIMADZU CORPORATION was used as a measuring device.

### <Preparation of rubber composition>

According to the compositions listed in Table 1, components were blended and kneaded to prepare rubber compositions of Examples and Comparative Examples. In Table 1, the rubber component, silica, and carbon black are expressed in integer values, and the other components are expressed in values to the first decimal place. Values in the table include rounded values as necessary.

### <Preparation and evaluation of vulcanized rubber>

The obtained rubber compositions of Examples and Comparative Examples were vulcanized at 145°C for 33 minutes to obtain vulcanized rubber test pieces. The obtained vulcanized rubber test pieces were evaluated in terms of low rolling resistance and wet grip performance with the following methods. Further, samples were prepared by performing vulcanization at 160°C for 10 minutes to determine whether or not discoloration in appearance occurred.

### (2) Low rolling resistance

The loss tangent (tan δ) of each test piece was measured using a viscoelasticity measuring device (manufactured by GABO) under conditions of a temperature of 50°C, a strain of 1%, and a frequency of 15 Hz. The evaluation result was expressed as an index with the reciprocal of the tan δ of Comparative Example 5 being 100. A larger index value indicates a smaller tan δ at 50°C, meaning the rolling resistance is low.

### (3) Wet grip performance

The loss tangent (tan δ) of each test piece was measured using a viscoelasticity measuring device (manufactured by GABO) under conditions of a temperature of -5°C, a strain of 1%, and a frequency of 15 Hz. The evaluation result was expressed as an index with the tan δ of Comparative Example 5 being 100. A larger index value indicates a larger tan δ at -5°C, meaning the wet grip performance is excellent.

### (4) Discoloration in appearance

The test pieces were stored at 40°C and 50 pphm in an ozone atmosphere for 7 days, and then whether or not discoloration occurred in surface was visually determined.
O: Discoloration did not occur
×: Discoloration occurred

**[Table 1]**

| | | | Example 1 | Example 2 | Comparative Example 1 | Comparative Example 2 | Example 3 | Comparative Example 3 | Comparative Example 4 | Comparative Example 5 |
|---|---|---|---|---|---|---|---|---|---|---|
| Composition | NR * 1 | Part by mass | 41 | 41 | 41 | 41 | 41 | 41 | 41 | 41 |
| | Modified SBR 1 *2 | | 31 | 31 | 31 | 31 | 31 | 31 | 31 | 31 |
| | Modified SBR 2 *3 | | 28 | 28 | 28 | 28 | 28 | 28 | 28 | 28 |
| | Carbon black *4 | | 5 | 5 | 5 | 5 | 5 | 5 | 5 | 5 |
| | Silica *5 | | 65 | 65 | 65 | 65 | 65 | 65 | 65 | 65 |
| | Stearic acid | | 1.0 | 1.0 | 1.0 | 1.0 | 1.0 | 1.0 | 1.0 | 1.0 |
| | Zinc white | | 2.5 | 2.5 | 2.5 | 2.5 | 2.5 | 2.5 | 2.5 | 2.5 |
| | Fatty acid metal salt *6 | | 3.3 | 0.5 | 5.0 | 7.3 | 3.3 | 3.3 | 3.3 | 3.3 |
| | Wax *7 | | 1.9 | 1.9 | 1.9 | 1.9 | 1.9 | 1.9 | 1.9 | 1.9 |
| | Antioxidant *8 | | 4.7 | 4.7 | 4.7 | 4.7 | 4.7 | 4.7 | 4.7 | 4.7 |
| | Resin *9 | | 6.0 | 6.0 | 6.0 | 6.0 | 6.0 | 6.0 | 6.0 | 6.0 |
| | Silane coupling agent 1 * 10 | | 6.2 | 6.2 | 6.2 | 6.2 | 5.2 | 7.2 | 8.1 | - |
| | Silane coupling agent 2 * 11 | | - | - | - | - | - | - | - | 6.2 |
| | Vulcanization system * 12 | | 5.8 | 5.8 | 5.8 | 5.8 | 5.8 | 5.8 | 5.8 | 5.8 |
| Content of silane coupling agent with respect to 100 parts by mass of silica | | Part by mass | 9.5 | 9.5 | 9.5 | 9.5 | 8.0 | 11.0 | 12.5 | 9.5 |
| Evaluation | Low rolling resistance | Index | 143 | 124 | 137 | 144 | 140 | 148 | 145 | 100 |
| | Wet grip performance | Index | 108 | 108 | 103 | 102 | 108 | 108 | 103 | 100 |
| | Discoloration in appearance | - | O | O | × | × | O | × | × | O |

| | | | | | | | | | | |
|---|---|---|---|---|---|---|---|---|---|---|
| *1 NR: natural rubber *2 Modified SBR 1: modified styrene-butadiene rubber synthesized with the following method *3 Modified SBR 2: modified styrene-butadiene rubber synthesized with the following method, 10 parts by mass oil extension (Table 1 is an amount excluding the amount of oil extension) *4 Carbon black: product name "Asahi #78" manufactured by Asahi Carbon Co., Ltd. *5 Silica: product name "Nipsil AQ" manufactured by Tosoh Silica Corporation *6 Fatty acid metal salt: fatty acid zinc salt, product name "Aktiplast PP" manufactured by LANXESS *7 Wax: product name "Ozo Ace-0111" manufactured by NIPPON SEIRO CO., LTD. *8 Antioxidant: total amount of antioxidant including product name "NOCRAC 6C" manufactured by OUCHI SHINKO CHEMICAL INDUSTRIAL CO., LTD. *9 Resin: C₅/C₉-based resin, product name "Petrotack 90" manufactured by Tosoh Corporation *10 Silane coupling agent 1: 3-[ethoxybis(3,6,9,12,15-pentaoxaoctacosan-1-yloxy)silyl]-1-propanethiol, product name "Si363" manufactured by Evonik Degussa *11 Silane coupling agent 2: bis(3-triethoxysilylpropyl)polysulfide, product name "ABC-856" manufactured by Shin-Etsu Chemical Co., Ltd. *12 Vulcanization system: total blending amount of vulcanizing agent and vulcanization accelerator | | | | | | | | | | |

### (Synthesis method of modified SBR1)

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.09 mmol of 2,2-ditetrahydrofurylpropane was added, and 0.7 mmol of n-butyllithium was added. Subsequently, the mixture was polymerized for 1.5 hours at 50°C. Next, 0.63 mmol of N,N-bis(trimethylsilyl)-3-[diethoxy(methyl)silyl]propylamine was added as a modifier to the polymerization reaction system when the polymerization conversion ratio reached nearly 100%, and a modification reaction was carried out for 30 minutes at 50°C. Subsequently, the reaction was stopped by adding 2 mL of an isopropanol solution containing 5% by mass of 2,6-di-t-butyl-p-cresol (BHT), and the result was dried according to a conventional method to obtain modified SBR 1.

As a result of measuring the microstructure of the obtained modified SBR 1, the bound styrene content was 10% by mass.

### (Synthesis method of modified SBR2)

A tank reactor equipped with a stirrer, that is, a tank pressure vessel including a stirrer and a jacket for temperature control, having an internal volume of 10 L, having a ratio (L/D) between the internal height (L) and the internal diameter (D) of 4.0, and having an inlet in a bottom portion and an outlet in a top portion, was used as a polymerization reactor. 1,3-butadiene, styrene, and n-hexane, from which water had been removed beforehand, were mixed respectively at rates of 17.2 g/min, 10.5 g/min, and 145.3 g/min. In a static mixer provided in the middle of a pipe used for supplying the obtained mixed solution to the inlet of the reactor, n-butyllithium for performing a treatment of inactivating remaining impurities was added at a rate of 0.117 mmol/min to be mixed, and the resultant mixed solution was continuously supplied to the bottom portion of the reactor. In addition, 2,2-bis(2-oxolanyl) propane as a polar substance and n-butyllithium as a polymerization initiator were supplied respectively at rates of 0.019 g/min and 0.242 mmol/min to the bottom portion of the polymerization reactor in which the mixed solution was vigorously stirred by the stirrer, to continuously perform a polymerization reaction. The temperature was controlled so that the temperature of a polymer solution in the outlet in the top portion of the reactor could be 75°C.

Next, to the polymer solution flown out through the outlet of the reactor, tetrakis(3-trimethoxysilylpropyl)-1,3-propanediamine diluted to 2.74 mmol/L as a coupling agent was continuously added at a rate of 0.0302 mmol/min (a n-hexane solution containing 5.2 ppm of water), and the polymer solution to which the coupling agent had been added was mixed as a result of passing through the static mixer to cause a coupling reaction. Here, the time up to the addition of the coupling agent to the polymer solution flown out from the outlet of the reactor was 4.8 min, the temperature was 68°C, and the difference between the temperature during the polymerization and the temperature up to the addition of the modifier was 7°C. To the polymer solution in which the coupling reaction had been caused, an antioxidant (BHT) was continuously added at a rate of 0.055 g/min (a n-hexane solution) in an amount of 0.2 g per 100 g of the resultant polymer to complete the coupling reaction. At the same time as the addition of the antioxidant, an oil (JOMO Process NC140 manufactured by JX Nippon Mining & Metals Corporation) was continuously added in an amount of 10.0 g per 100 g of the resultant polymer, and the resultant was mixed by the static mixer. The solvent was removed by steam stripping to obtain modified SBR 2.

As a result of measuring the microstructure of the obtained modified SBR 2, the bound styrene content was 40% by mass.

According to Table 1, it is understood that the rubber compositions of Examples of the present disclosure have excellent low rolling resistance and wet grip performance and no discoloration in appearance.

On the other hand, by comparing Examples 1 to 2 and Comparative Examples 1 to 2, it is understood that when the content of the fatty acid metal salt exceeds 3.5 parts by mass with respect to 100 parts by mass of the rubber component, discoloration in appearance occurs.

Further, by comparing Examples 1 and 3 and Comparative Examples 3 to 4, it is understood that when the content of the silane coupling agent having a thiol group exceeds 10.5 parts by mass with respect to 100 parts by mass of silica, discoloration in appearance occurs.

## Claims

1. A rubber composition for tire, comprising a rubber component, a filler, a silane coupling agent, and a fatty acid metal salt, wherein
the rubber component comprises isoprene skeleton rubber and styrene-butadiene rubber,
the filler comprises at least silica,
the silane coupling agent has a thiol group,
a content of the silane coupling agent is 1 part by mass or more and 10.5 parts by mass or less with respect to 100 parts by mass of the silica, and
a content of the fatty acid metal salt is 0.1 parts by mass or more and 3.5 parts by mass or less with respect to 100 parts by mass of the rubber component.

2. The rubber composition for tire according to claim 1, wherein the filler further comprises carbon black, and a proportion of the silica in a total amount of the silica and the carbon black is 80% by mass or more and less than 100% by mass.

3. The rubber composition for tire according to claim 1, wherein a content of the silica is 20 parts by mass or more and less than 120 parts by mass with respect to 100 parts by mass of the rubber component.

4. The rubber composition for tire according to claim 1, wherein the silane coupling agent has 20 or more and 75 or less carbon atoms.

5. The rubber composition for tire according to claim 1, wherein a content of the styrene-butadiene rubber is 10 parts by mass to 90 parts by mass in 100 parts by mass of the rubber component.

6. The rubber composition for tire according to claim 1, wherein the styrene-butadiene rubber comprises at least styrene-butadiene rubber having a bound styrene content of 35% by mass or more.

7. The rubber composition for tire according to claim 1, wherein the styrene-butadiene rubber is modified styrene-butadiene rubber.

8. A tread rubber, comprising the rubber composition for tire according to any one of claims 1 to 7.

9. A tire, comprising the tread rubber according to claim 8.
